Europäisches Patentamt

European Patent Office

Office européen des brevets

(19)

(11) Veröffentlichungsnummer: **0 253 987**

**A1**

(12) **EUROPÄISCHE PATENTANMELDUNG**

(21) Anmeldenummer: 87107334.2

(22) Anmeldetag: 20.05.87

(51) Int. Cl.4: **H01M 2/14 , H01M 10/34**

(30) Priorität: 18.07.86 DE 3624378

(43) Veröffentlichungstag der Anmeldung:
27.01.88 Patentblatt 88/04

(84) Benannte Vertragsstaaten:
AT DE FR GB IT SE

(71) Anmelder: **VARTA Batterie Aktiengesellschaft**
**Am Leineufer 51**
**D-3000 Hannover 21(DE)**

(72) Erfinder: **Voss, Ernst, Dr., Dipl.-Ing.**
**Heidestrasse 14**
**D-6237 Liederbach(DE)**
Erfinder: **Bräutigam, Reinhard**
**Alt Langenhain 9**
**D-6238 Hofheim(DE)**

(74) Vertreter: **Kaiser, Dieter Ralf, Dipl.-Ing.**
**Gundelhardtstrasse 72**
**D-6233 Kelkheim/Ts.(DE)**

(54) Separatorvlies für wartungsfreie Bleiakkumulatoren mit festgelegtem Elektrolyten.

(57) Die unerwünschte Säureschichtung in Bleiakkumulatoren, deren Elektrolyt in Vliesseparatoren, vorzugsweise Glasvliesen, festgelegt ist, läßt sich durch künstliche Erhöhung des Strömungswiderstandes innerhalb des Vlieses, ohne daß die Ionenwanderung behindert wird, vermeiden. Man erreicht dies, indem man das Vlies vor dem Einbau mit einem ca. 3%igen Kieselsäuresol tränkt und anschließend trocknet, wobei das auf den Fasern abgeschiedene $SiO_2$ eine Gewichtszunahme des Vlieses um ca. 20% bedingt und seine innere Oberfläche von ca. 1 $m^2/g$ bis auf ca. 50 $m^2/g$ vergrößert. Die zur Herstellung des Kieselsäuresols geeigneten $SiO_2$-Teilchen weisen bei einem Durchmesser von ca 15 nm (15 • $10^7$ cm) BET-Oberflächen zwischen 100 $m^2/g$ und 300 $m^2/g$ auf.

EP 0 253 987 A1

## Separatorvlies für wartungsfreie Bleiakkumulatoren mit festgelegtem Elektrolyten

Die Erfindung betrifft ein Separatorvlies für wartungsfreie Bleiakkumulatoren mit mindestens einer positiven Elektrode und einer negativen Elektrode, zwischen denen der Vliesseparator angeordnet ist, wobei der enthaltene Säureelektrolyt in den Poren der aktiven Massen und des Separators festgelegt ist.

Bleiakkumulatoren, deren Säureelektrolyt frei beweglich ist, sind bekanntlich mit dem Mangel behaftet, daß es beim Laden und Entladen zur Ausbildung einer Säureschichtung kommt, es sei denn, daß man von einer Umwälzung oder Durchströmung des Elektrolyten Gebrauch macht. Auch die Gasung während der Überladephase vermag die Säureschichtung, die zu ungleichmäßigen Stromverteilungen innerhalb der Zelle und als Folge davon zu allmählichem Kapazitätsabfall führt, zwar aufzuheben, jedoch ist die Überladung selbst lebensdauerabträglich.

Bei den wartungsfreien Akkumulatoren gemäß dem eingangs formulierten Gattungsbegriff, die dicht verschlossen und mit einem Überdruckventil versehen sind, behindert die Festlegung des zumeist unterschüssig vorhandenen Elektrolyten wohl eine Elektrolytkonvektion, schließt diese und die daraus resultierende Säureschichtung aber keineswegs aus. Hinzu kommt, daß bei der hier im Sauerstoffverzehr-Zyklus arbeitenden Zelle nur die positive Elektrode zur Zellengasung beiträgt, deren mechanische Effizienz zu schwach ist, um die Säureschichtung zu beseitigen. Das Problem der Säureschichtung, verbunden mit der Folge eines frühzeitigen Kapazitätsabfalls und verkürzter Lebensdauer, tritt daher auch bei wartungsfreien Akkumulatoren auf.

Da bei wartungsfreien bzw. gasdichten Bleizellen auch ein ungehinderter Sauerstofftransport von der positiven zur negativen Elektrode gewährleistet sein muß, ist dieser Forderung bei der Fixierung des Elektrolyten zwischen den Elektroden ebenfalls Rechnung zu tragen. Sie wird im allgemeinen von Vliesen als Mittel der Festlegung erfüllt, da aufgrund der bekannten Unterschiede in den Porengrößen Aktivmaterial und Separator der unterschüssige Elektrolyt sich unter dem Einfluß des porenradiusabhängigen Kapillardrucks so zwischen diesen verteilt, daß zumindest alle kleinen Elektrodenporen voll sind, während die nur zum Teil gefüllten größeren Poren des Separatorvlieses für den Gastransport zur Verfügung stehen. Aus der US-PS 3,846,175 ist die Verwendung von Glasfasermatten z.B. aus einem Borsilikatglas sowie von verschiedenen Kunststoffvliesen als Batteriescheider bekannt. Eine Säureschichtung jedoch vermögen heute gebräuchliche Vliese nicht zu verhindern.

Ein anderes erprobtes Mittel der Festlegung des Elektrolyten ist seine Gelifizierung mit einem Silikat-Gel. Hierbei können auch Vliese oder Gewebe mit dem Gel zusammenwirken, Die DE-PS 1 194 015 gibt dafür ein Beispiel.

Bei der Gelifizierung macht man davon Gebrauch, daß verdünnte Schwefelsäure mit Silikatsolen oder auch mit Silikatxerogelen formbeständige Hydrogele bildet. Als Xerogele bezeichnet man bis an die Grenze zum Festkörper denaturierte Gele, indem sie ihre Flüssigkeit auf irgendeine Weise (z.B. durch Abdampfen oder Abpressen) verloren haben, die aber bei Zugabe von neuem Dispersionsmittel wieder zum ursprünglichen Lyogel aufquellen können. Die Hydrogele sind durch ihren charakteristischen Aufbau aus langen Fäden von $SiO_2$-Primärteilchen, die während des Gelifizierungsprozesses entstehen, ähnlich wie ein Glasvlies strukturiert; in ihrem Innern ist die Leitfähigkeit und die Diffusionsgeschwindigkeit einer Batteriesäure nicht anders als bei einer in einem Vlies festgelegten Säure. Im Vergleich zum Vlies ist die Elektrolytkonvektion wegen der viel höheren reibenden Oberfläche innerhalb des Gels sogar praktisch unterbunden. Dafür ist die Gasdurchlässigkeit, weil das Gel naturgemäß zu 100% mit Säure gefüllt ist und keine gasführenden Poren besitzt, zumindest im frisch hergestellten Zustand mangelhaft. Bei einem Bleiakkumulator, der einen mit Gel immobilisierten Elektrolyten enthält, kann sich deshalb ein Sauerstoffzyklus erst nach und nach, wenn sich durch wiederholte Überladung ein Wasserverlust in der Zelle eingestellt hat und Schrumpfrisse im Gel entstanden sind, in Gang setzen.

Der Erfindung liegt daher die Aufgabe zugrunde, ein Separatorvlies für wartungsfreie Bleiakkumulatoren, verfügbar zu machen, der außer der Befähigung zum Aufsaugen und Festhalten des Säureelektrolyts mit der Eigenschaft ausgestattet ist, daß es für Gase einerseits genügend transparent ist, andererseits eine Säurebewegung in vertikaler Richtung, ausgelöst durch den mit der Ladung einhergehenden Dichte-Anstieg, bremst.

Die Aufgabe wird erfindungsgemäß dadurch gelöst, daß die innere Oberfläche des Vlieses durch in feiner Verteilung auf den Vliesfasern abgeschiedenes Siliziumdioxid erhöht ist.

Bevorzugt werden Glasfaservliese oder Kunststoffaservliese eingesetzt. Letzteren können säureresistente und oxidationsbeständige Fasermaterialien aus z.B. Polyester, Polyethylen, Polypropylen, Copolymeren des Ethylens und Propylens oder Polyolefinen zugrundeliegen. Gut geeignete Glasfaservliese besitzen z.B. eine innere Oberfläche zwischen 1,0 m²/g und 1,3 m²/g.

Die erfindungsgemäß durch eingelagertes SiO₂ modifizierten Vliese sollten eine Porosität im Bereich von 80% vis 95% und eine BET-Oberfläche von vorzugsweise 20 m²/g bis 50 m²/g aufweisen.

Durch die erfindungsgemäße Maßnahme der Oberflächenvergrößerung wird zugleich eine Erhöhung des Strömungswiderstandes des Vlieses erreicht, die Ionenwanderung wird dagegen kaum gehemmt.

Zur Herstellung des erfindungsgemäßen Separators wird das Vlies mit einem Siliziumdioxid-Sol getränkt und anschließend getrocknet. Dabei bleibt feinverteiltes Siliziumdioxid im Vlies zurück.

Da handelsübliche Sole in der Regel hochkonzentriert sind (30% SiO₂), müssen sie vorher durch Verdünnen auf eine Anwendungskonzentration etwa zwischen 1% und 5% SiO₂, vorzugsweise ca. 3% SiO₂, gebracht werden.

Durch das abgeschiedene SiO₂ ergibt sich eine Gewichtszunahme des Vlieses um 10% bis 30%, vorzugsweise um 15% bis 25%.

Es erscheint günstig, wenn die Fasern die Abscheidungssubstrat geringe Durchmesser und kurze Länge haben. Der Faserdurchmesser sollte im Bereich von etwa 0,1 μm bis 15 μm, vorzugsweise 0,5 μm bis 10 μm, und die Faserlänge bei 3 mm bis 10 mm liegen.

Im einzelnen wird bei der Herstellung erfindungsgemäßer Vliesseparatoren entsprechend den nachstehenden Beispielen verfahren.

Beispiel 1:

3 g eines reinen Glasvlieses mit einer inneren Oberfläche von 1 m²/g wurden mit einem Kieselsol getränkt, welches 3% SiO₂ enthielt. Das getränkte Vlies wurde im Vakuum bei 50°C 48 Stunden lang getrocknet. Die Gewichtszunahme betrug 0,8 g. Die spezifische Oberfläche des so behandelten Glasvlieses betrug 44 m²/g. Da der Strömungswiderstand proportional dem Quadrat der inneren reibenden Oberfläche ist, ergibt sich somit eine Erhöhung des Strömungswiderstandes um fast den Faktor 2 000.

Beispiel 2:

4,1 g eines binderhaltigen Glasvlieses mit einer inneren Oberfläche von 1,2 m²/g wurden mit einem Kieselsol getränkt, das 3% SiO₂ enthielt. Das getränkte Vlies wurde 50 Stunden bei 45°C im Vakuum getrocknet. Die Gewichtszunahme betrug 0,84 g. Die spezifische Oberfläche des so behandelten Vlieses betrug 34 m²/g. Damit ergibt sich eine Erhöhung des Strömungswiderstandes des Vlieses um den Faktor 800.

In einer Variation dieses Verfahrens wird während der Vliesherstellung das Vlies mit einem Kieselsol besprüht und kontinuierlich getrocknet. Eine weitere Variante besteht darin, daß das Vlies mit einem angesäuerten Kieselsäure-Sol getränkt wird, dann läßt man dieses Sol gelifizieren, wässert es und trocknet es. Auch auf diese Weise gelingt eine beträchtliche Erhöhung der inneren Oberfläche des Vlieses.

Ein besonders wirksames Verfahren besteht darin, daß man zum Tränken des fertigen Vlieses oder zum Besprühen während der Vliesherstellung ein Sol benutzt, das aus einem Xerogel hoher Oberfläche hergestellt wurde. Wenn man Xerogele in Wasser suspendiert, dann erhält man ein beständiges Sol, das beim Trocknen wieder zu einem Xerogel hoher Oberfläche führt. Ein solches Xerogel besteht z.B. aus chemisch reiner, auf pyrolytischem Wege erzeugter Kieselsäure (auch unter dem Handelsnamen Aerosil bekannt) und einer BET-Oberfläche von 100 m²/g bis 300 m²/g, wobei der Teilchendurchmesser bei ca. 15 nm = 15 • 10⁻⁷ cm liegt.

Beispiel 3:

3,5 g eines reinen Glasvlieses mit einer Oberfläche von 1,2 m²/g werden mit einem aus einem Xerogel hergestelltem Sol getränkt, welches 3% SiO₂ enthält. Nach dem Trocknen bei 120°C beträgt die Oberfläche des Vlieses 54 m²/g. Damit ergibt sich rechnerisch eine Erhöhung des Strömungswiderstandes um einen Faktor von ca. 2000.

Ein weiteres Verfahren besteht darin, daß man zum Tränken des fertigen Vlieses oder zum Besprühen während der Vliesfertigung ein Mischsol aus einem Aquasol und einem Xerogel benutzt.

Beispiel 4:

Durch intensives Rühren von 14 g Xerogel mit 86 g Wasser wird ein stabiles SiO₂-Sol erzeugt. Dies wird mit einem Aquasol (hergestellt durch Ansäuern einer Wasserglas-Lösung und anschließende Reinigung durch Dialyse) in der Weise vermischt, daß das Mischsol 2,7% $SiO_2$ aus dem Xerogel und 0,3% $SiO_2$ aus dem Aquasol enthält. Dieses Mischsol wird in beschriebener Weise zum Tränken des Vlieses benutzt.

## Ansprüche

1. Separatorvlies für wartungsfreie Bleiakkumulatoren mit mindestens einer positiven Elektrode und einer negativen Elektrode, zwischen denen der Vliesseparator angeordnet ist, wobei der enthaltene Säureelektrolyt in den Poren der aktiven Massen und des Separators festgelegt ist, dadurch gekennzeichnet, daß die innere Oberfläche des Vlieses durch in feiner Verteilung auf den Vliesfasern abgeschiedenes Siliziumdioxid erhöht ist.

2. Separatorvlies nach Anspruch 1, dadurch gekennzeichnet, daß es ein Glasfaservlies ist.

3. Separatorvlies nach Anspruch 1, dadurch gekennzeichnet, daß ein Kunststoffaservlies ist.

4. Separatorvlies nach einem der Ansprüche 1 bis 3, dadurch gekennzeichnet, daß die Porosität des Vlieses 80% bis 95% und seine BET-Oberfläche etwa 20 $m^2$/g bis 50$m^2$/g beträgt.

5. Separatorvlies nach einem der Ansprüche 1 bis 4, dadurch gekennzeichnet, daß beim unbehandelten Vlies der Faserdurchmesser 0,1 $\mu$m bis 15 $\mu$m, vorzugsweise 0,5 $\mu$m bis 10 $\mu$m, und die Faserlänge 3 mm bis 10 mm beträgt.

6. Separatorvlies nach einem der Ansprüche 1 bis 5, dadurch gekennzeichnet, daß das Gewicht des Vlieses durch das abgeschiedene $SiO_2$ um 10% bis 30%, vorzugsweise 15% bis 25% erhöht ist.

7. Verfahren zur Herstellung eines Separatorvliesses nach einem der Ansprüche 1 bis 6, dadurch gekennzeichnet, daß das Vlies in einem Siliziumdioxid-Sol getränkt und anschließend getrocknet wird.

8. Verfahren nach Anspruch 7, dadurch gekennzeichnet, daß die Konzentration des Sols an $SiO_2$ 1% bis 5%, vorzugsweise 3%, beträgt.

9. Bleiakkumulator mit mindestens einer positiven und einer negativen Elektrode, zwischen denen ein Separatorvlies angeordnet ist, wobei der enthaltene Säureelektrolyt in den Poren der aktiven Massen und des Separators festgelegt ist, dadurch gekennzeichnet, daß er ein Separatorvlies nach einem oder mehreren der Ansprüche 1 - 6 enthält.

**Europäisches Patentamt**

# EUROPÄISCHER RECHERCHENBERICHT

Nummer der Anmeldung

EP 87 10 7334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 8, Nr. 53 (E-231)[1490], 9. März 1984; & JP-A-58 206 046 (MATSUSHITA DENKI SANGYO K.K.) 01-12-1983 * Insgesamt * | 1-3,7, 9 | H 01 M 2/14 H 01 M 10/34 |
| | --- | | |
| Y | US-D- 524 464 (COGLIANO) * Spalte 2, Zeilen 1-26 * | 1-3,7, 9 | |
| | --- | | |
| A | US-A-4 262 068 (KONO et al.) * Spalte 4, Zeilen 52-68; Spalte 5, Zeilen 18-19 * | 1-3,5, 9 | |
| | --- | | |
| A | US-A-3 862 861 (McCLELLAND et al.) * Spalte 5, Zeilen 46-64 * | 1,2,4, 5,9 | RECHERCHIERTE SACHGEBIETE (Int. Cl.4) |
| | --- | | H 01 M |
| A | FR-A-2 390 019 (ACCUMULATORENFABRIK SONNENSCHEIN) * Seite 2, Zeilen 12-37; Seite 3, Zeilen 1-13 * | 1-5,9 | |
| | ----- | | |

Der vorliegende Recherchenbericht wurde für alle Patentansprüche erstellt.

| Recherchenort DEN HAAG | Abschlußdatum der Recherche 07-08-1987 | Prüfer COOK S.D. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82